# EUROPÄISCHE PATENTANMELDUNG

(11) **EP 0 933 914 A2**
(43) Veröffentlichungstag der Anmeldung: **04.08.1999**
(21) Anmeldenummer: 99250015.7
(22) Anmeldetag: 15.01.1999
(51) Int. Cl.: H04M 3/42, H04M 7/00, H04Q 7/22, H04M 11/06

(54) **Verfahren zum Aufbau eines über ein öffentliches Telefonnetz führenden Sprachkanals und Vorrichtung zum Durchführen des Verfahrens**

(30) Priorität: 02.02.1998 DE 19806181
(71) Anmelder: MANNESMANN Aktiengesellschaft, 40213 Düsseldorf (DE)
(72) Erfinder: Barth, Rüdiger, Dipl. Kfm., 40545 Düsseldorf (DE); Gaida, Jürgen, 40215 Düsseldorf (DE); Müller, Thomas, Dr.-Ing., 50937 Köln (DE); Vieweg, Stefan, Dr.-Ing., 47877 Willich (DE)
(74) Vertreter: Meissner, Peter E., Dipl.-Ing.

(57) **Zusammenfassung**

Der Aufbau eines Sprachkanals für einen Dienst einer Dienstzentrale wird optimiert durch ein Endgerätz, eine Dienstzentrale und ein Verfahren zum Aufbau eines über ein öffentliches Telefonnetz führenden Sprachkanals (2) zwischen einem Operator in einer Dienstzentrale (4), insbesondere einer Verkehrstelematik-Dienstzentrale, und einem bei letzterer (4) anrufenden Endgerät (3), insbesondere Verkehrstelematik-Endgerät,
wobei ein sprachkanalunabhängiger Datenkanal (1) zwischen dem Endgerät und der Dienstzentrale aufgebaut wird,
wobei über diesen Datenkanal (1) vom Endgerät an die Dienstzentrale (4) einem Dienst der Dienstzentrale (4) zuordenbare Daten übermittelt werden,
wobei ein Sprachkanal (2) zwischen der Dienstzentrale (4) und dem Endgerät (3) aufgebaut wird,
wobei über den Datenkanal (1) übermittelte Daten dem mit dem Sprachkanal (2) verbundenen Operator in der Dienstzentrale (4) zur Verfügung gestellt werden.

## Beschreibung

Die Erfindung betrifft ein Verfahren zum Aufbau eines über ein öffentliches Telefonnetz führenden Sprachkanals und Vorrichtungen zum Durchführen des Verfahrens.

Dienste einer Dienstzentrale können über ein öffentliches Telefonnetz sprachbasiert angeboten werden. Auch können derartige Dienste auf alphanumerische Datenübertragungskanäle gestützt angeboten werden.

Aufgabe der Erfindung ist die Schaffung eines Verfahrens bzw. von Vorrichtungen zum Durchführen des Verfahrens, welche möglichst einfach, effizient und kostengünstig eine Optimierung von Diensten einer Dienstzentrale ermöglicht.

Die Aufgabe wird durch die Gegenstände der unabhängigen Ansprüche gelöst.

Die Übertragung von Daten über einen sprachkanalunabhängigen Datenkanal (insbesondere einen alphanumerischen Kanal) vom Endgerät an die Dienstzentrale zusätzlich zum Aufbau eines Sprachkanals zwischen dem Endgerät und der Dienstzentrale ermöglicht eine schnelle und eventuell automatische Information der Dienstzentrale über zumindest einige relevante Daten, wie beispielsweise Endgerätsidentifikation, Dienst-Authorisierung, Endgerätsort etc. Die Übertragung kann insbesondere über einen Mobilfunknetz-Kurznachrichtenkanal (z.B. GSM-SMS) automatisch vom Endgerät an die Zentrale erfolgen, wenn der Benutzer des Endgerätes eine Verbindung zur Zentrale durch Knopfdruck etc. am Endgerät anfordert.

Das Verfahren kann insbesondere in einer Dienstzentrale und/oder in einem Endgerät als Programm etc. realisiert werden, wobei in der Dienstzentrale bzw. im Endgerät jeweils die dort erforderlichen Verfahrensschritte implementiert werden.

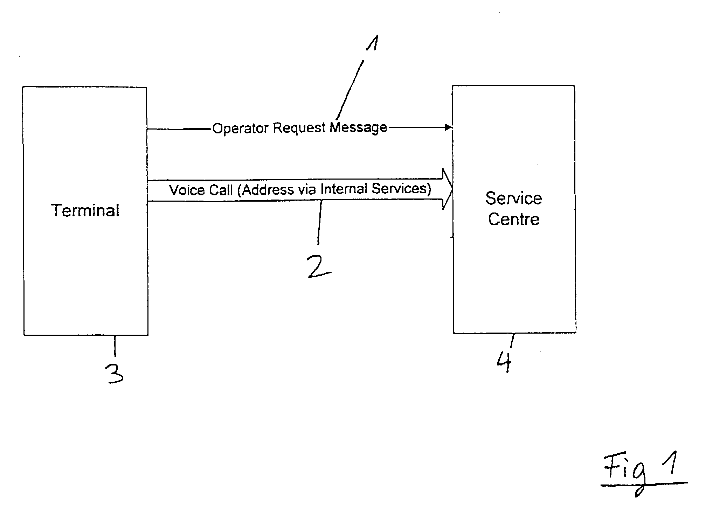

Weiter erfindungswesentliche Merkmale ergeben sich aus der nachfolgenden Beschreibung eines Ausführungsbeispiels anhand der Zeichnung. Dabei zeigt
- Fig. 1: ein Beispiel des Aufbaus eines Datenkanals und eines Sprachkanals zwischen einem Endgerät und einer Dienstzentrale,.

Das Endgerät 3 sendet eine Anfrage 1 an die Dienstzentrale 4. Die bei der Anfrage über den hierzu aufgebauten Datenkanal zwischen dem Endgerät und der Dienstzentrale übermittelten Daten können beispielsweise die Endgerätsidentität, eine Dienstauthorisierung, den Endgerätsort etc. umfassen. Ferner baut das Endgerät einen Sprachkanal 2 zur Dienstzentrale 4 auf. Über den Sprachkanal kann der Endgerätbenutzer mit einer zugeordneten Stelle in der Dienstzentrale 4 kommunizieren; dies kann ein menschlicher oder automatisierter Operator sein. Im vorliegenden Beispiel sind der Datenkanal und der Sprachkanal einem Mobilfunknetz zugeordnet. Der Sprachkanal ist ein üblicher Mobilfunk-Sprachkanal. Der Datenkanal ist ein hiervon unabhängiger Kurznachrichtenkanal, beispielsweise GSM-SMS; das Endgerät 3 sendet an die Dienstzentrale 4 über den Datenkanal 1 Daten als Point-to-Point-Nachricht. Über den Datenkanal 1 können eventuell auch mehrere Nachrichten vom Endgerät an die Dienstzentrale und/oder von der Dienstzentrale an das Endgerät gesendet werden.

Über den Datenkanal übermittelte Daten können in der Dienstzentrale zum internen Weiterleiten (Routing) und/oder innerhalb eines Dienstes verwendet werden. Über den Sprachkanal und/oder den Datenkanal kann die Dienstzentrale Daten an das Endgerät 3 weiterleiten.

## Patentansprüche

1. Verfahren zum Aufbau eines über ein öffentliches Telefonnetz führenden Sprachkanals (2) zwischen einem Operator in einer Dienstzentrale (4), insbesondere einer Verkehrstelematik-Dienstzentrale, und einem bei letzterer (4) anrufenden Endgerät (3), insbesondere Verkehrstelematik-Endgerät, wobei ein sprachkanalunabhängiger Datenkanal (1) zwischen dem Endgerät und der Dienstzentrale aufgebaut wird,
wobei über diesen Datenkanal (1) vom Endgerät an die Dienstzentrale (4) einem Dienst der Dienstzentrale (4) zuordenbare Daten übermittelt werden,
wobei ein Sprachkanal (2) zwischen der Dienstzentrale (4) und dem Endgerät (3) aufgebaut wird,
wobei über den Datenkanal (1) übermittelte Daten dem mit dem Sprachkanal (2) verbundenen Operator in der Dienstzentrale (4) zur Verfügung gestellt werden.

2. Verfahren nach Anspruch 1,
dadurch gekennzeichnet,
daß dem Operator in der Dienstzentrale die Daten automatisch und/oder mit Angabe eines Bezugs zu einem zugehörigen Sprachkanal zur Verfügung gestellt werden.

3. Verfahren nach einem der vorhergehenden Ansprüche,
dadurch gekennzeichnet,
daß die Daten ldentifizierungsdaten zur Identifikation des Endgeräts (3) enthalten.

4. Verfahren nach einem der vorhergehenden Ansprüche,
dadurch gekennzeichnet,
daß das Endgerät (3) für den Dienst der Dienstzentrale authorisierende Authorisierungsdaten in den über den Datenkanal übermittelten Daten enthalten sind.

5. Verfahren nach einem der vorhergehenden Ansprüche,
dadurch gekennzeichnet,
daß den Ort des Endgeräts und/oder einen Zielort für eine Endgerätsnavigation repräsentierende Ortsdaten in den über den Datenkanal übermittelten Daten enthalten sind, wobei vorzugsweise die Daten im Endgerät und/oder von einem an das Endgerät angeschlossenen Ortserfassungsgerät erfaßt werden.

6. Verfahren nach einem der Ansprüche 3 bis 5,
dadurch gekennzeichnet,
daß vom Endgerätbenutzter abgefragte und/oder im Endgerät enthaltene und/oder vom Endgerät erfaßte weitere Informationen vom Endgerät über den Datenkanal an die Dienstzentrale übermittelt werden.

7. Verfahren nach einem der vorhergehenden Ansprüche,
dadurch gekennzeichnet,
daß das öffentliche Telefonnetz ein Mobilfunknetz, insbesondere GSM-Netz ist.

8. Verfahren nach einem der vorhergehenden Ansprüche,
dadurch gekennzeichnet,
daß der Datenkanal ein Mobilfunk-Kurznachrichtenkanal, insbesondere GSM-SMS ist.

9. Verfahren nach einem der vorhergehenden Ansprüche,
dadurch gekennzeichnet,
daß die Dienstzentrale dem Endgerät über den Datenkanal Dienstdaten zu einem in der Dienstzentrale realisierten Dienst, insbesondere Verkehrsinformationsdienst und/oder Navigationsdienst, zurücksendet.

10. Verfahren nach einem der vorhergehenden Ansprüche,
dadurch gekennzeichnet,
daß die Dienstzentrale dem Anrufer Daten zu einem in der Dienstzentrale realisierten Dienst, insbesondere Verkehrsdienst und/oder Navigationsdienst, über den Sprachkanal zurücksendet.

11. Verfahren nach einem der vorhergehenden Ansprüche,
dadurch gekennzeichnet,
daß der Operator ein menschlicher Operator in der Dienstzentrale ist.

12. Verfahren nach einem der vorhergehenden Ansprüche,
dadurch gekennzeichnet,
daß der Operator ein computerbasiertes Sprachdialogsystem in der Dienstzentrale umfaßt.

13. Verfahren nach einem der vorhergehenden Ansprüche,
dadurch gekennzeichnet,
daß in Abhängigkeit von den über den Datenkanal (3) übermittelten Daten in der Dienstzentrale eine interne Weiterleitung an einen bestimmten Dienst erfolgt.

14. Verfahren nach einem der vorhergehenden Ansprüche,
dadurch gekennzeichnet,
daß bei der Ausführung eines Dienstes, insbesondere Verkehrsinformationsdienstes oder Navigationsdienstes, in der Dienstzentrale über den Datenkanal übermittelte Daten verwendet werden.

15. Verfahren nach einem der vorhergehenden Ansprüche,
dadurch gekennzeichnet,
daß der Datenkanal vom Endgerät aufgebaut wird.

16. Verfahren nach einem der Ansprüche 1 bis 14,
dadurch gekennzeichnet,
daß der Datenkanal gleichzeitig mit oder nach dem Sprachkanal aufgebaut wird.

17. Dienstzentrale, insbesondere Verkehrstelematik-Dienstzentrale, zur Durchführung des Verfahrens nach einem der vorhergehenden Ansprüche.

18. Dienstzentrale, insbesondere nach Anspruch 17,
welche eine an einen Datenkanal anschließbare Datenkanal-Kommunikationseinrichtung, insbesondere Kurznachrichten-Kommunikationseinrichtung,
eine Kommunikationseinrichtung zum Kommunizieren über den Sprachkanal, eine Einrichtung zum Zuordnen eines Datenkanals und/oder von über einen Datenkanal empfangenen Daten zu einem Sprachkanal aufweist.

19. Endgerät, insbesondere Verkehrstelematik-Endgerät, zur Durchführung des Verfahrens nach einem der Ansprüche 1 bis 16.

20. Endgerät, insbesondere nach Anspruch 19,
welches eine Kommunikationseinrichtung zum Kommunizieren über einen Datenkanal,
eine Kommunikationseinrichtung zum Kommunizieren über einen Sprachkanal,
eine Einrichtung zum Zuordnen eines Dienstkanals zu einem Sprachkanal aufweist.

21. Dienstzentrale oder Endgerät nach einem der Ansprüche 17 bis 20,
dadurch gekennzeichnet,
daß der Sprachkanal ein Mobilfunk-Sprachkanal ist.

22. Endgerät oder Dienstzentrale nach einem der Ansprüche 17 bis 21,
dadurch gekennzeichnet,
daß der Datenkanal ein Mobilfunk-Kurznachrichtenkanal, insbesondere GSM-SMS-Kanal ist.
